# EUROPEAN PATENT SPECIFICATION

(11) **EP 0 359 244 B1**
(45) Date of publication and mention of the grant of the patent: **22.12.1993**
(21) Application number: 89116975.7
(22) Date of filing: 13.09.1989
(51) Int. Cl.: B62H 1/00

(54) **Automatic stand device for a two-wheeled vehicle**
Automatische Standvorrichtung für Zweiradfahrzeug
Dispositif de support automatique pour deux roues

(30) Priority: 13.09.1988 JP 229445/88; 30.09.1988 JP 246924/88
(43) Date of publication of application: 21.03.1990
(73) Proprietor: HONDA GIKEN KOGYO KABUSHIKI KAISHA, Minato-ku Tokyo (JP)
(72) Inventor: Miyamaru, Yukio, Itabashi-ku Tokyo (JP); Fujita, Haruyasu, Nerima-ku Tokyo (JP)
(74) Representative: Prechtel, Jörg, Dipl.-Phys. Dr.

(56) References cited:
- EP-A- 0 097 623
- WO-A-84/00337
- GB-A- 2 104 464
- GB-A- 2 174 656
- US-A- 2 300 762
- US-A- 4 671 374
- PATENT ABSTRACTS OF JAPAN vol. 8, no. 54 (M-282)(1491) 10 March 1984, & JP-A-58 206486 (YAMAHA HATSUDOKI K.K.) 1 December 1983,

## Description

The invention relates to a stand device for a two-wheeled vehicle comprising: a stand pivotally mounted to the vehicle, a motor to selectively extend or retract said stand, a transmission selectively coupled to said motor and said stand, a control circuit selectable to engage said transmission and to power said motor to extend said stand, a sensor switch actuatable to drive said control circuit and a stand switch actuatable by an operator to actuate said control circuit.

A stand device typically is used for the support of two-wheeled vehicles when parked or stationary. Examples of embodiments of stand devices may be found in JP-U-53-4564. Conventionally, stand devices of this type comprise stands which can be pivoted out from a retracted position near the bottom of the chassis near the rear wheel. In motor bikes the extension and retraction of the stand is typically executed by means of a worm gear driven by a bi-directional motor. When the two-wheeled vehicle is stationary, the operator may activate the motor to extend the stand from the horizontal retracted position to the vertical extended position; conversely, when the vehicle is to be put in motion, the operator may activate the motor to retract the stand from the extended position.

For conventional motor driven stand devices for two-wheeled vehicles, however, there exists no method for holding the stand in a retracted position while the vehicle is in motion by interrupting the transmission of power from the motor to the stand.

A stand device of the above-mentioned type is disclosed in JP-A-58-206486. According to this prior art, the stand may selectively be extended or retracted by means of a stand motor which can be manually activated by the operator by means of a manual switch. Independent thereof, the stand is automatically retracted in response to the velocity, measured by means of a sensor, when the motorcycle is started. In this prior art, there is the danger that the stand can inadvertently be extended during driving, via said manual switch, which would lead to damages or even accidents.

GB-A-2104464 discloses a stabilizing system adapted to support a two-wheeled vehicle in a stabilized position when the vehicle is in slow motion or is about to be set in motion. Said stabilizing system comprises an outrigger having ground-engaging and retracted positions and vehicle-speed sensing means operable to move said outrigger between a ground-engaging and a retracted position by means of an electric motor. The outrigger may be moved in a parking position to be used as a stand. It is mentioned in GB-A-2104464 that it would be desirable to include a fail-safe arrangement and that the system should be fail-safe in the retracted position at speed. It is not disclosed in GB-A-2104464 how to realize such a fail safe arrangement.

A further stand device of the above-mentioned type is disclosed in GB-A-2174656.

It is an object of the present invention to improve a stand device of the above-mentioned type such that the stand cannot inadvertently be extended at speed.

This object is attained by the features of claim 1.

In other words, the invention relates to a motor-driven stand-device for the support of a two-wheeled vehicle when the vehicle is stationary, wherein the stand device comprises a pivoting stand, a stand motor to extend and retract the stand, and a sensing means that prevents the extension of the stand when the vehicle is in motion. The determination that the vehicle is not moving may be based on the output of sensors monitoring the throttle, the brakes, the engine speed or the movement of the vehicle; this determination may additionally be based on a combination of the afore-mentioned factors.

Preferred embodiments of the invention are described in the subclaims.

The above and further objects, details and advantages of the present invention will become apparent from the following detailed description of preferred embodiments thereof, when read in conjunction with the accompanying drawings.
- Fig. 1: is a side view of a motor bike showing a stand device according to an embodiment of the present invention
- Fig. 2: is a side view of the stand device with reference points IV-IV;
- Fig. 3: is a side view of the stand device with some outer parts removed to show internal mechanisms,
- Fig. 4: shows a transverse cross-section of the stand motor transmission,
- Fig. 5: is a control circuit diagram of the motion determinator,
- Fig. 6: is a diagram of ON-OFF positions of limit switches;
- Fig. 7: is a diagram showing the relationship between the engine speed determination circuit and switches,
- Fig. 8: shows the electronic configuration of the engine speed determination circuit in Fig. 7,
- Fig. 9: shows graphs of electrical pulse waves,
- Fig. 10: shows an electrical configuration of an engine speed detector,
- Fig. 11: is a view of a speedometer and a speed sensor,
- Fig. 12: shows a cross-section of the speedometer and the speed sensor in Fig. 11 along the XII-XII line,
- Fig. 13: is a stand motor control circuit diagram,
- Fig. 14: shows a cross-section of a variation of the speedometer and the speed sensor in Fig. 12,
- Fig. 15: shows a cross-section of a variation of the speedometer and the speed sensor in Fig. 12,
- Fig. 16: is a control circuit diagram for the variation of the speedometer and the speed sensor in Fig. 15, and
- Fig. 17: shows a longitudinal section through the motion sensor switch
- Figure 18.: is a view of a locking hand brake on a handle bar.
- Figure 19.: is a Cross-section view showing the power unit and power train of the motorbike in Fig. 1.

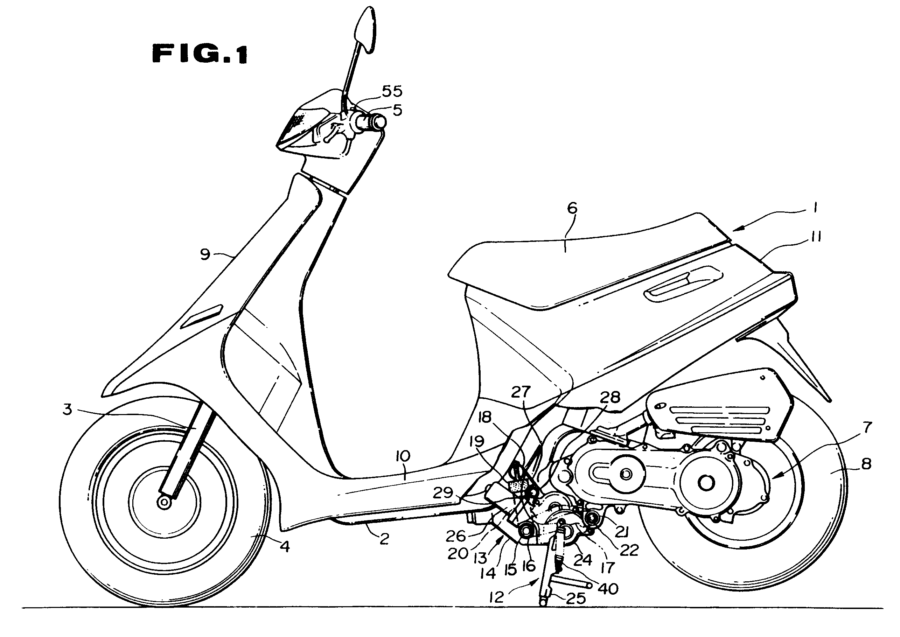

A motorbike 1 with the stand device of the present invention is shown in Fig. 1, comprising the chassis 2; front fork 3, that pivots the front wheel 4; steering handle 5; seat 6; power unit 7; rear wheel 8; front cover 9; floor panel 10 on which the feet of the driver rest; rear cover 11; and the stand assembly 12.

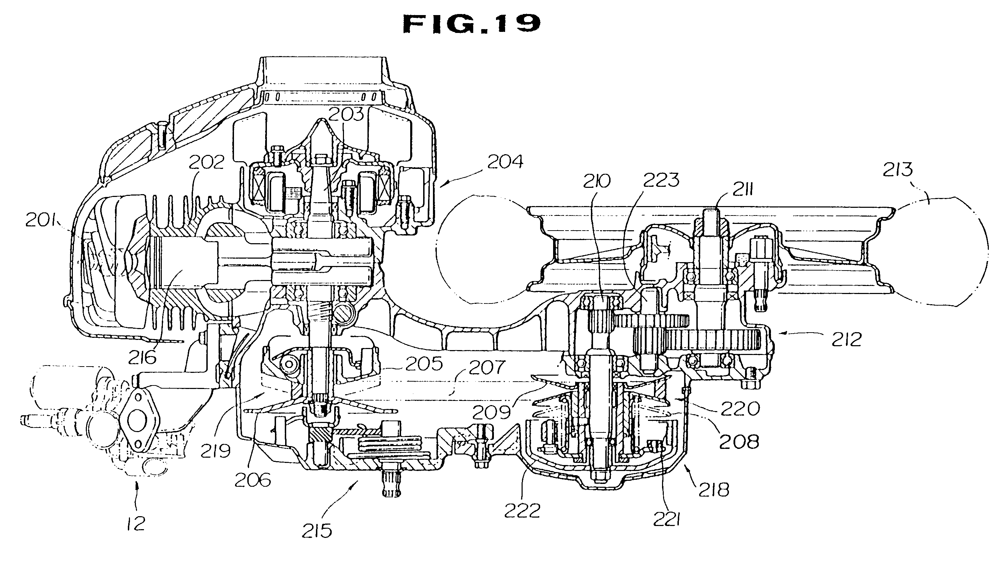

The power unit of the motorbike 1 is shown in Figure 19 together with a stand assembly 12. The power unit is composed of a front block and a rear block connected to each other by a belt-type variable transmission. The front block includes an engine 202, a crankshaft 203, an alternating current generator (ACG) and a drive pulley 219 of the variable transmission. The rear block includes a driven pulley 220 of the variable transmission, a centrifugal clutch 218, reduction gears 212 and a drive wheel 213. The engine 202, having an ignition plug 201 at an upper part thereof, is located at the front end of the front block and the axis of the cylinder is inclined in the vertical longitudinal plane of the motorbike. The crankshaft 203, connected to a piston 216 of the engine 202 through a crankrod, extends horizontally in the transverse direction. The alternating current generator (ACG) 204 is connected to an end (upper end in the Fig. 19) of the crankshaft 203. The drive pulley 219 of the belt-type variable transmission is attached to the other end of the crankshaft 203. The drive pulley 219 comprises a sliding pulley disc 205, which is slidable along the crankshaft while rotation relative thereto is restricted; and a fixed pulley disc 206 which is fixed to the crankshaft 203. The distance between the sliding pulley disc 205 and the fixed pulley disc 206 is variable as the slidable pulley disc 205 slides along the crankshaft 203.

To the rear of the crankshaft 203 is installed a driven pulley 220 of the variable transmission, a centrifugal clutch 218, a reduction gear mechanism 212 and the drive wheel 213. The driven pulley 220 has a construction similar to the drive pulley 219. The driven pulley comprises a slidable pulley disc 208 and a fixed pulley disc 209 of which the distance therebetween is variable. A belt is wound around the drive pulley 219 and the driven pulley 220 to transmit the driving force from the former to the latter. By varying the distance between the pulley discs, effective diameter of both the drive pulley 219 and the driven pulley 220 may be altered, and therefore the transmission ratio is also variable. An input shaft 210 is disposed coaxially through the driven pulley 220 and is supported rotatable relative to the latter. The centrifugal clutch 218 is attached to an end (the lower end in Fig. 19) of the input shaft 210 so as to connect and disconnect the driven pulley 220 and the input shaft 210. More precisely, inner clutch elements 221 of the centrifugal clutch 218 are fixed to the input shaft 210, and an outer disc clutch 222 of the centrifugal clutch 218 is fixed to the driven pulley 220. The inner clutch elements 221 are disposed equidistantly about the axis of the input shaft 210 and the distance from the axis is so determined that there remains a distance between the outer surface of the inner clutch elements 221 and the inner surface of the outer clutch disc 222. Elastic means give an inward thrust force to the inner clutch elements 221 so as to keep them at that position while the driven pulley 220 is in a stationary state. The radial distance of the inner clutch elements 221 increases as the the rotational speed of the driven pulley 220 increases, but the inner clutch elements still do not contact the outer clutch disc 222 while the rotational speed is lower than a predetermined value. When the rotational speed of the driven pulley 220 reaches and exceeds the predetermined level, the inner clutch elements 221 come in contact with the outer clutch disc 222 and the drive force is transmitted from the driven pulley 220 to the input shaft 210.

The reduction gears 212, having a counter shaft 223, drive shaft 211, and the gears attached thereto, are connected to the input shaft 210. The drive force transmitted to the input shaft 210 is transmitted therefrom to the reduction gears 212 while reducing the rotational speed as being transmitted therethrough. Finally, the driving force is transmitted to the drive wheel 213 attached to the drive shaft 211.

By virtue of the above-mentioned construction, driving force of the engine 202 is disconnected while the rotational speed of the driven pulley 220 is lower than a certain value. The driving force is automatically transmitted to the drive wheel when the rotational speed thereof surpasses a predetermined value. Furthermore, the ratio of the rotational speed of the crankshaft 203 to the driven wheel 220 is variable whether the engine is connected to the drive wheel or not.

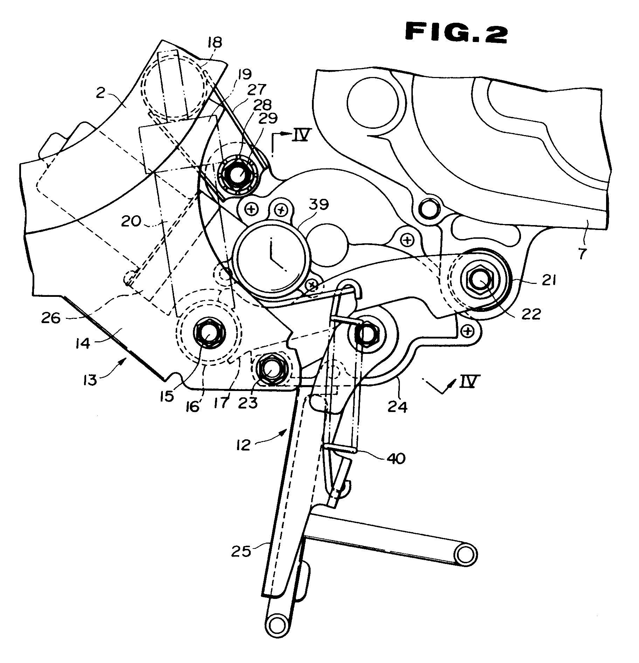

A stand assembly 12 is disposed at a front lower part of the power unit beside the engine. The stand assembly 12 is described in detail as follows. As shown in Fig. 2, the power unit 7 is linked to a pair of arms 17 through the rubber bush 21 by bolt 22. The stand assembly 12 consists of the casing 24 that pivots with the pivot shaft 23 inside the bracket 14, stand body 25 that pivots between set angles inside the casing 24, and stand motor 26 installed inside the casing 24. The casing 24 and stand motor 26 are located between the two arms 17 on the rear of the chassis 2.

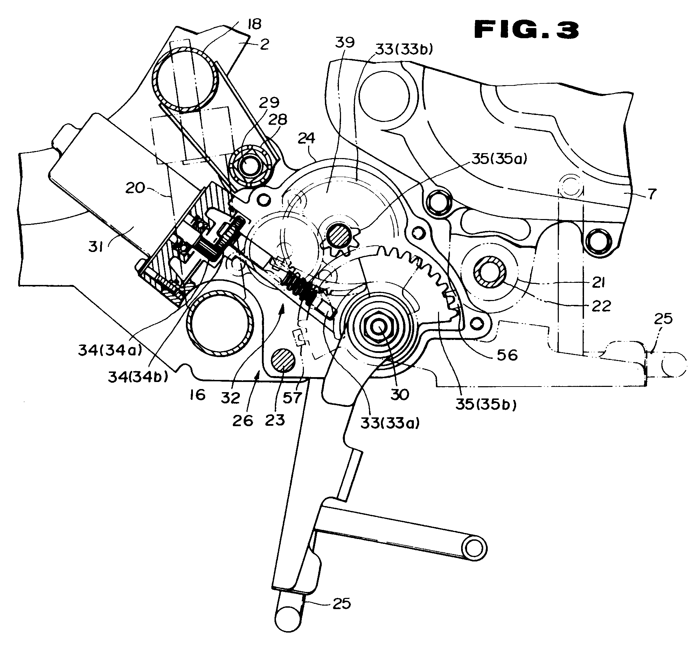

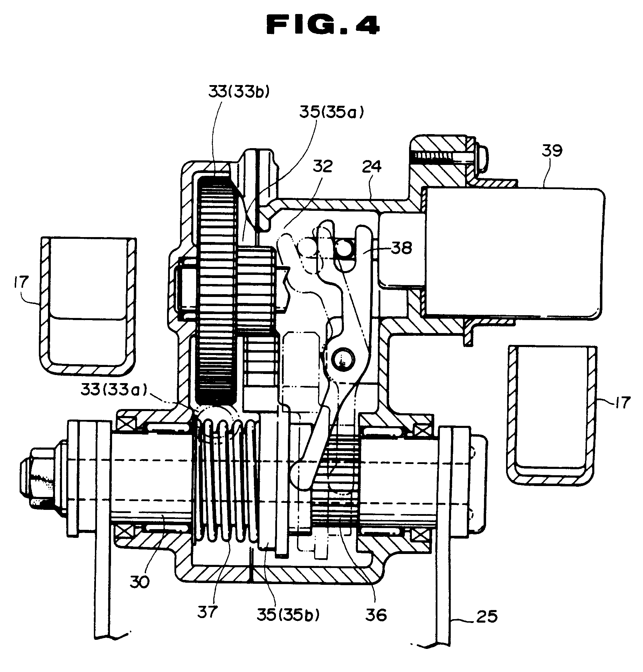

Fig. 3 and Fig. 4 show details of the mechanism of the stand motor 26. The casing 24 contains the rotary drive shaft 30 that pivots the stand body 25. The drive shaft 30 is rotated by the electric motor 31 through the transmission gear assembly 32. The motor 31 is installed parallel to the longitudinal axis of the motorbike, and at a right angle to the drive shaft 30.

The transmission gear assembly 32 consists of the primary reduction gear unit 34 and secondary reduction gear unit 35. The primary reduction gear unit contains the worm gear 33 composed of the worm 33a that parallels the rotary shaft of the electric motor 31, worm wheel 33b that engages the worm 33a, drive gear 34 directly linked with the rotary shaft of the motor 31, and driven gear 34b directly linked with the worm 33a. The secondary reduction gear unit 35 consists of the drive gear 35a installed coaxial with the worm wheel 33b, and driven gear 35b that rotates with the drive shaft 30.

The rotation speed of the electric motor 31 is reduced by the primary reduction gear unit 34, worm gear 33, and secondary reduction gear unit 35. The primary reduction gear unit 34 is perpendicular to the rotary shaft of the electric motor 31, while the secondary reduction gear unit 35 is parallel to the motor shaft because its axial direction is changed by the worm gear 33. In other words, the primary and secondary reduction gear units 34 and 35 are perpendicular to each other. The driven gear 35b of the secondary reduction gear unit 35 is shaped like a fan coaxial with the drive shaft 30. It disengages with the drive gear 35a when the stand 25 is at the extended position (indicated by the solid lines in Fig. 3) and the retracted position (indicated by the dashed lines in Fig 3). Therefore, the secondary reduction gear unit 35 functions as a clutch.

As shown in Fig. 4, the driven gear 35b is linked to turn in synchrony with drive shaft 30 through the spline 36. When the drive gear 35a is engaged as indicated by solid lines in Fig. 4, the rotation of motor 31 is transmitted to the drive shaft 30. When disengaged, as indicated by dashed lines, the transmission ceases. The driven gear 35b of the secondary reduction gear unit 35 is kept away from the drive gear 35a by the return spring 37. The force of the return spring 37 is independent of the oscillating arm 38 that slides the driven gear 35b along drive shaft 30 when oscillated by the solenoid 39.

In Figs. 1 and 2, the spring 40 retains the stand in either the extended or the retracted position. The power unit 7 contains a centrifugal clutch (see 218 in Fig 19) that transmits engine power to the rear wheel 8 after the engine speed has reaches a preset level.

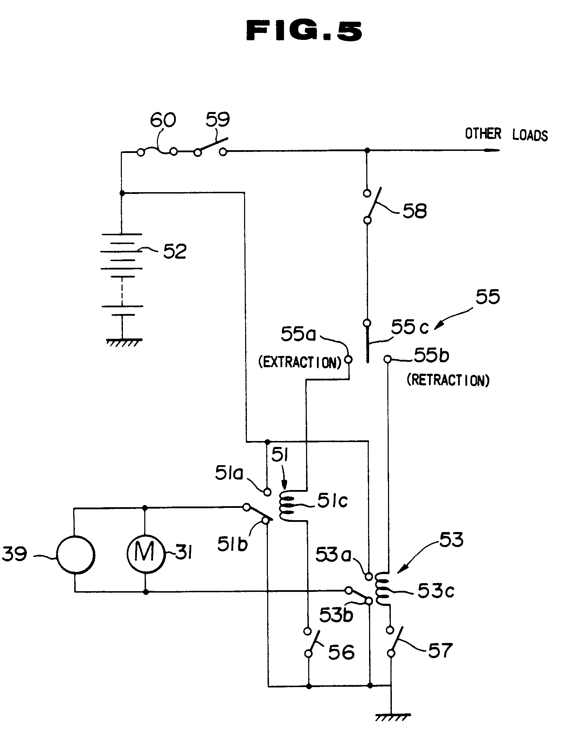

Fig. 5 shows the control circuit for the electric motor 31 that drives the stand 25. One lead of the motor 31 is connected to the positive terminal of the battery 52 through the NO contact 51a of the relay 51, and on the other hand may be grounded through the NC contact 51b of the relay 51. The other lead of the motor 31 is connected to the positive terminal of the battery 52 through the NO contact 53a of the relay 53, and also connected to the negative terminal of the battery 52 through the NC contact 53b of the relay 53.

One end of coil 51c of relay 51 is connected to contact 55a of the stand switch 55 in order to pivot the stand to the extended position; and the other end is connected to the limit switch 56 that determines if the stand is in the extended position. In contrast, one end of the coil 53c of the relay 53 is connected to the contact 55b of the stand switch 55 to pivot the stand to the horizontal position, and the other end is connected to the negative terminal of the battery 52 through the limit switch 57 that determines if the stand is in the retracted position. The transfer contact 55c of the stand switch 55 is connected to the positive terminal of the battery 52 through the throttle switch 58, ignition switch 59 and fuse 60.

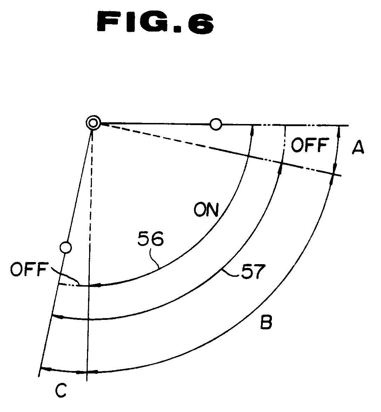

As shown in Fig. 1, the stand switch 55 is located near the steering handle 5 for easy access. The switch is used to pivot the stand between three positions: extended, retracted, and neutral (OFF). The limit switches 56 and 57 operate as proximity sensors to determine the position of the stand 25. As shown in Fig. 3, these switches are provided inside casing 24 at the two ends of the pivot range of the driven gear 35b. Fig. 6 shows the ON-OFF positions of the switches 56 and 57 in relation to the pivot range of the stand 25. The switch 56 turns off when the stand 25 is extended (position C); the switch 57 turns off when the stand 25 is retracted (position A); both switches are ON when the stand is in the remaining range (positions B). The stand 25 pivots between the extended and retracted positions, and stops at either position as controlled by the limit switches.

The present invention relates in particular to the control of the stand device so that the stand can be moved in the extended position only when the vehicle is stationary.

In a first embodiment of the present invention, a throttle switch is provided to determine if the vehicle is stopped. When the throttle is closed, the engine speed decreases for idling. The centrifugal clutch is disengaged, and the throttle switch is thereby activated. The stand 25 is pivoted because the solenoid 39 is not actuated, and the gears 35a and 35b of the secondary reduction gear unit 35 are disengaged.

When the stand switch 55 is turned to the EXTRACTION position, electric current flows from the battery 52 to the coil 51c of the relay 51 through the closed circuit consisting of the throttle switch 58 and limit switch 56. As a result, the NO contact 51a closes, actuating the electric motor 31 and solenoid 39. The oscillating arm 38 is moved to slide the driven gear 35b of the secondary reduction gear unit 35 along the drive shaft 30. The driven gear 35b is engaged with the drive gear 35a and the stand 25 pivots to the vertical or extended position as the rotation of the electric motor 31 is transmitted through the primary reduction gear unit 35 and worm gear 33.

The pivot motion driven by the electric motor 31 is stopped when the limit switch 56 turns off to indicate that the stand 25 has been fully extended. The stand 25 can be returned to the retracted position by starting the vehicle after turning off the solenoid 39 and the electric motor 31. Turning off the solenoid 39 will disengage the drive gear 35a and driven gear 35b of the secondary reduction gear unit 35 to enable the pivot motion of the stand 25. When the vehicle is started, the throttle switch 58 turns off to open the circuit of the motor 31, resulting in the stand 25 remaining in the retracted position.

The stand 25 can also be returned to the horizontal or retracted position by using the electric motor 31. When this occurs, the gears 35a and 35b of the secondary reduction gear unit 35 must be engaged (limit switch 57 is ON). When this is done, the stand switch 55 is turned to the RETRACTION position. The relay 53 is actuated to close the NO contact 53a. As a result, current flows to the electric motor 31 in the opposite direction and causes the stand 25 to pivot to the retracted position. As shown in Fig. 6, when the stand 25 pivots to the retracted position, the limit switch 57 turns off to stop the current to the motor 31. The pivot motion can be effected only when the throttle switch 58 is ON, and the vehicle is stopped. In this embodiment, a period of time exists between the time the throttle is closed and the speed of the engine decreases, and this is the time taken by the delay of switch 58 that closes the throttle (see Fig. 5).

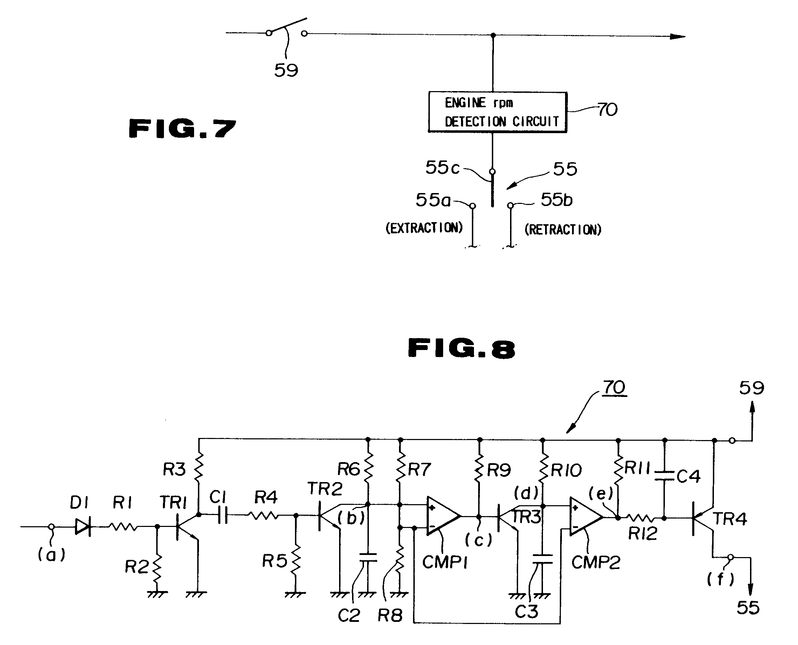

In a second embodiment of the present invention, an engine speed sensor circuit 70 (in the following also called sensor 70) is located between the ignition switch 59 and stand switch 55. This arrangement is diagrammed in Fig. 7. The sensor 70 is activated when the engine speed is reduced below a preset limit, and when the sensor 70 is activated, the motor 31 causes the stand 25 to pivot.

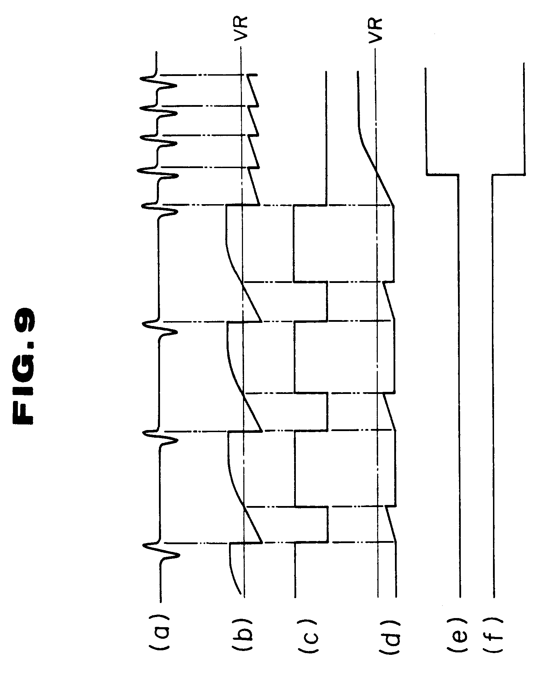

Fig. 8 shows the construction of this sensor circuit 70. When a rotation pulse (see Fig. 9(a)) is generated from the ignition system, it is filtered through the diode D1 to pass only the positive pulse part, which is divided through the resistors R1 and R2 to be fed to transistor TR1. The transistor TR1 is connected to the capacitor C1 and the resistor R3. Capacitor C1 is discharged each time the transistor TR1 is turned on. The other terminal of capacitor C1 is connected to the input of transistor TR2 through the voltage divider resistors R4 and R5. Output of transistor TR2 is fed to the capacitor C2 which is also connected to the resistor R6. The voltage of capacitor C2 is shown in Fig. 9(b).

As engine speed decreases, capacitor C1 discharges less often, and so the transistor TR2 turns off frequently to increase the voltage of capacitor C2. As engine speed increases, the frequency of transistor TR2 turning off decreases and decreases the voltage of capacitor C2.

The voltage of capacitor C2 is supplied to the positive terminal of comparator CMP1 for comparison with reference voltage VR. The reference voltage VR is generated by the resistors R7 and R8, and passes to the negative terminal of the comparator CMP1.

Fig. 9c shows the CMP1 which generates pulses that increase as the voltage of the capacitor C2 increases above the reference voltage VR. This means that the pulse from the comparator CMP1 decreases as the engine speed increases. The output of the comparator CMP1 is supplied to transistor TR3 which, at its input, is also connected to resistor R9. The output of transistor TR3 is connected to capacitor C3 and resistor R10. The capacitor C3 is charged to increase its voltage when the transistor TR3 is off, or the pulse at point (c) decreases (Fig. 9 (d)). Therefore, the voltage at point (d) increases as engine speed increases. This voltage is supplied to the positive terminal of the comparator CMP2 for comparison with the reference voltage VR. Fig. 9 (e) shows the output voltage of the comparator CMP2, which increases when the voltage at the point (d) increases above the reference voltage VR. The voltage at the point (e) is smoothed by the resistors R11 and R12, and by capacitor C4, and is then passed to transistor TR4.

Transistor TR4 is connected to the ignition switch 59 and stand switch 55 shown in Fig. 7. When engine speed increases above a preset level, the transistor TR4 turns off to break the circuit between the ignition switch 59 and the stand switch 55. The waveform at point f is shown in Fig. 9(f).

The engine speed sensor circuit 70 remains open when engine speed is above a preset level. The stand motor 31 that drives the stand 25 can be started only when the engine speed is below this preset level.

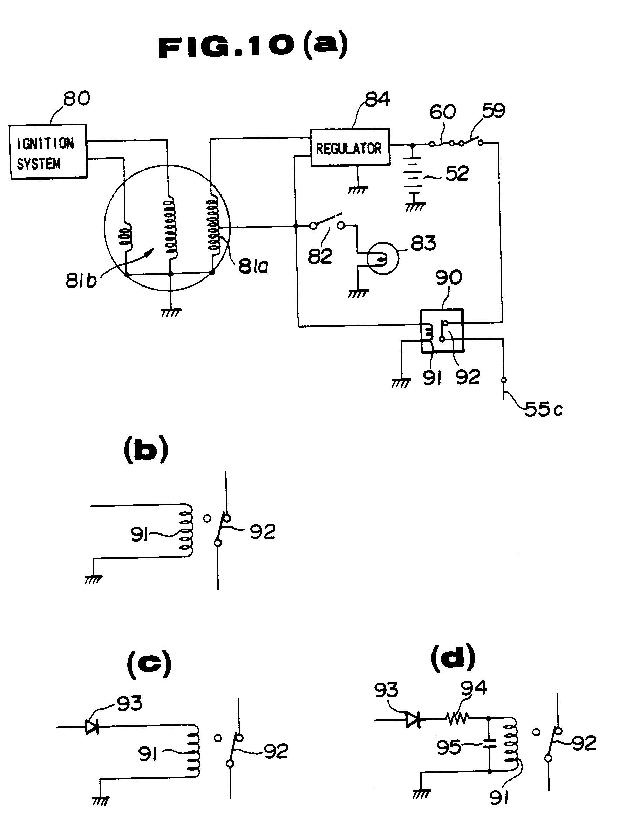

A third embodiment of the present invention is shown in the electrical configuration of Fig. 10. This embodiment features an NC relay driven by an AC generator. The relay replaces the throttle switch 58 in Fig. 5, and allows the pivot stand 25 to be extended when the engine speed falls below a preset level. The AC generator 81a,81b has lamp coil 81a and ignition coil 81b connected to ignition system 80. The lamp coil 81a supplies AC current to the lamp 83 through the switch 82, and lamp coil 81a is connected to the NC relay. The output of the regulator 84 is charged to the battery 52 through this lamp coil 81a (see Fig. 5).

The relay 90 is AC/DC compatible. When used as an AC relay, its coil 91 should be connected directly with the lamp coil 81a, and the NC contact 92 should be installed at the same position as the throttle switch 58 (see Fig. 10b). The NC contact 92 is connected to the battery 52 through the ignition switch 59 and fuse 60, and to the transfer contact 55c of the stand switch 55 (see Fig. 5). It can be used as a DC relay if connected as shown in Fig. 10(c) or 10(d). The circuit (c) has diode 93 inserted between the coil 91 of the relay 90 and the lamp coil 81a. On the circuit (d), the diode 93 and resistor 94 are serially connected, and the smoothing capacitor 95 is installed parallel to the coil 91. In both cases, the NC contact 92 should be installed at the same position as the AC circuit.

When the engine is started, electromotive forces are generated by the lamp coil 81a, and when the voltage increases above a preset level, the relay 90 is actuated to open the NC contact 92. In this state, the motor 31 cannot be started. As engine speed decreases, output voltage of the lamp coil 81a also decreases, and when the output voltage decreases below a preset level and releases relay 90, the NC contact 92 is closed to start the motor 31 that drives the stand 25. Therefore, the stand 25 is extended when the vehicle is not moving.

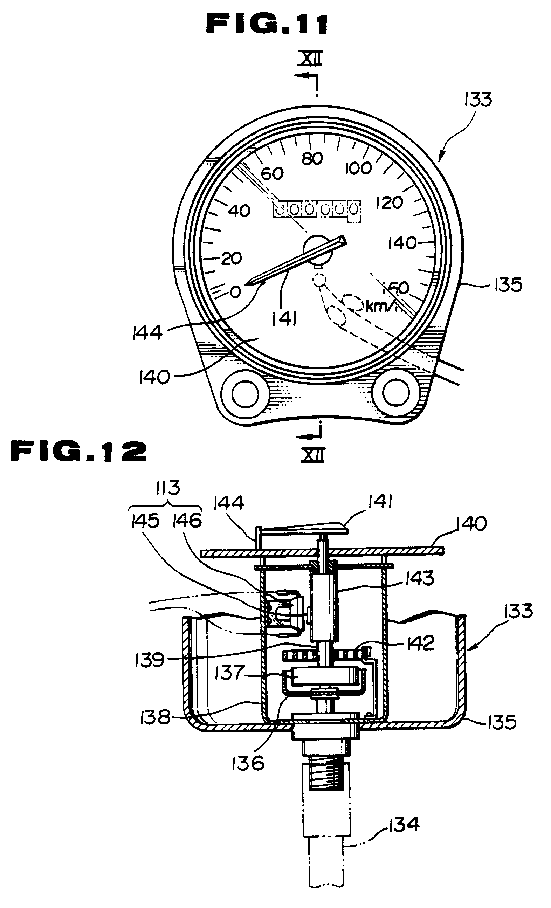

In a fourth embodiment of the present invention, the control of the extension of the stand device for a two-wheeled vehicle is based on monitoring the position of the speedometer needle; the position of the needle is used as an indication that the vehicle is stationary. Speedometer 133, shown in Figs. 11 and 12, comprises rotatable parts mounted in casing 135. Speedometer 133 is comprising rotation magnet 136 driven by speedometer cable 134; aluminum disk 137 freely rotating relatively to the same axis of the rotation magnet 136; stay 138 integrated with the aluminum disk 137 and mounted on the casing 135; display plate 140 in which rotation shaft 139 is inserted and freely rotatable; guide needle 141 at the end of display plate 140 in which rotation shaft 139 is inserted; and returnspring 142 installed between rotation shaft 139 and stay 138. Said rotation shaft is inserted through control pipe 143 and installed in stay 138, while returnspring 142 is mounted on the side on which the rotation shaft 139 is connected with the aluminum disk 137. Stopper 144 is mounted protruding from display plate 140 to stop guide needle 141 at "0" on the display plate 140 by integrating the guide needle 141 with the plate.

The stop acknowledgment means 113 in this embodiment is composed of each component of speedometer 133, magnet 145 integrated with control pipe 143, proximity switch 146 integrated with the stay 138. Magnet 145 and proximity switch 146 are positioned so that the proximity switch 146 will be "ON" when guide needle 141 is set with the stopper 144. The impact on the guide needle 141 is reduced by mounting the magnet 145 near the center position of the rotating shaft 139.

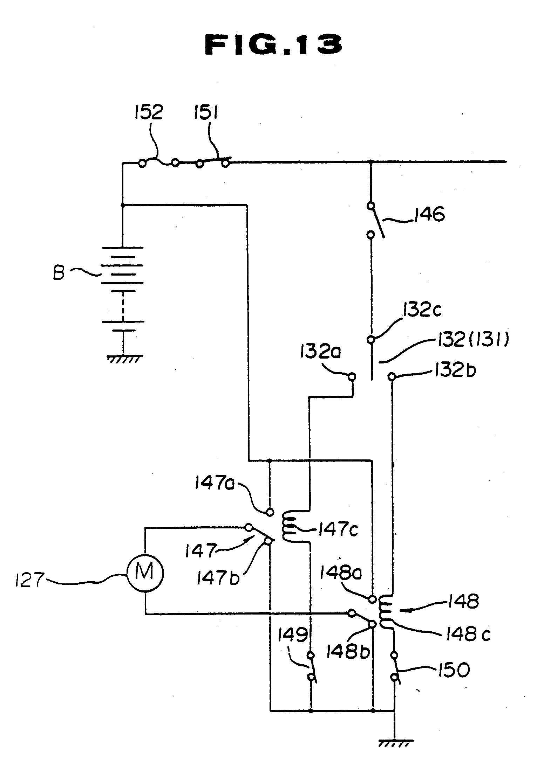

The control circuit to drive the stand 25 will be explained based on Fig. 12 and Fig. 13. In Fig. 13, the electric motor 127 is connected with the positive terminal of the battery B through the contact 147a of relay 147, and with the negative terminal of the battery B through the contact 147b of the relay 147, while the other end of the electric motor 127 is connected with the positive terminal of the battery B through the contact 148a of relay 148, and with the negative terminal of the battery B through the contact 148b of relay 148. One end of coil 147c of relay 147 is connected with the stand-up contact 132a of switch 132, while the other end is connected with the negative terminal of the battery B through the stand-up limit switch 149. Another coil, coil 148c, of relay 148, is connected with the accommodation contact 132b in switch 132, and the other end is connected with the negative terminal of the battery B through the accommodation limit switch 150. Thus, the operation means 131 of the present example of execution is composed of the switch 132, both relays of 147 and 148, the stand-up limit switch 149 and the accommodation limit switch 150. Switch contact 132c of switch 132 is connected to the positive terminal of battery B through proximity switch 146, ignition switch 151, and fuse 152.

In this embodiment, when the two-wheeled vehicle stops, the front wheel 4 ceases rotation, and the guide needle 141 of the speedometer 133 comes in contact with the stopper 144. When this happens, the magnet 145 mounted on the rotation shaft 139, will activate the proximity switch 146. The stand 25 may then be extended by activating the switch 132 of the operation means 131. Since proximity switch 146 is ON if the switch 132 is pushed down to the stand-up contact 132a, the current flows to the coil 147c of the relay 147 and the fixed off-contact 147a of the relay 147 is closed so that the electric motor 127 may be operated to extend stand body 25 to the extended position. The rotation of the stand body 25 will terminate when the stand body 25 is pivoted to the extended position and the limit switch 149 is off.

Conversely, when the stand body 25 has to be retracted, switch 132 is pushed, and the proximity switch 148 mounted in the speedometer 133 is "ON", thereby retracting the stand body 25. By this switch operation, the electric current flows to the coil 148c of the relay 148 and closes the fixed off-contact 148a of the relay 148, the stand body 25 will pivot to the retracted position simultaneously as the electric motor 127 rotates in the opposite direction. The pivoting of the stand body 25 to the retracted position is stopped by switching off the retraction limit switch 150 when the stand body 25 is fully retracted. Thus, the stand body 25 is extended only when the vehicle is stationary.

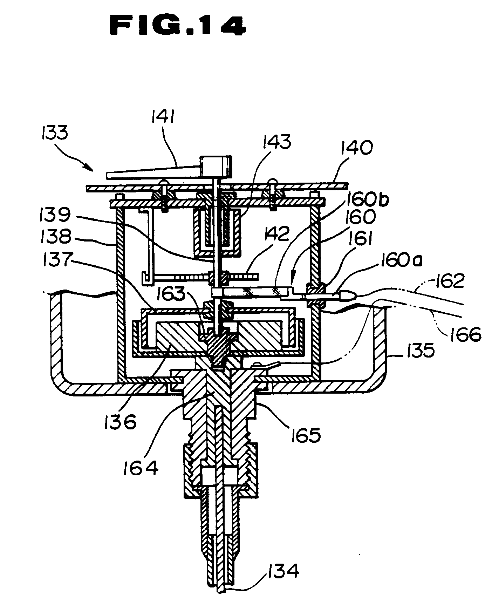

Figure 14 illustrates a fifth embodiment of the present invention. This embodiment is a modification of the stop-acknowledgment means 113 shown in the fourth embodiment of the present invention.

The stop-acknowledgment means 113 in the present embodiment is the device in which is mounted on-off switch 160 in speedometer 133 as a speed sensor. The stop-acknowledgment means 113 will be switched ON when the guide needle 141 is at the "0" position; when positioned at any other position, it will be OFF. The on-off switch 160 is also provided to stop guide needle 141 at "0".

Contact 160a of the on-off switch 160 is mounted on stay 138 through insulating material 161. The end of the contact protrudes on the side of the rotation shaft 139, and the other end is electrically connected with the control system through wire lead 162. The other contact 160b is mounted along the radial direction of rotation shaft 139, so that together with the rotation of the rotation shaft 139, it will move in the same plane which perpendicularly intersects the rotation shaft 139. Contact 160b is electrically connected with the control system through the rotation shaft, the bearing 163 supporting, for free rotation, the rotation shaft 139; coupler 164 connected with the rotation magnet 136 and the speedometer cable 134; bearing 165 supporting the coupler 164 in a freely rotating way; and the wire lead 166 mounted on the bearing 165.

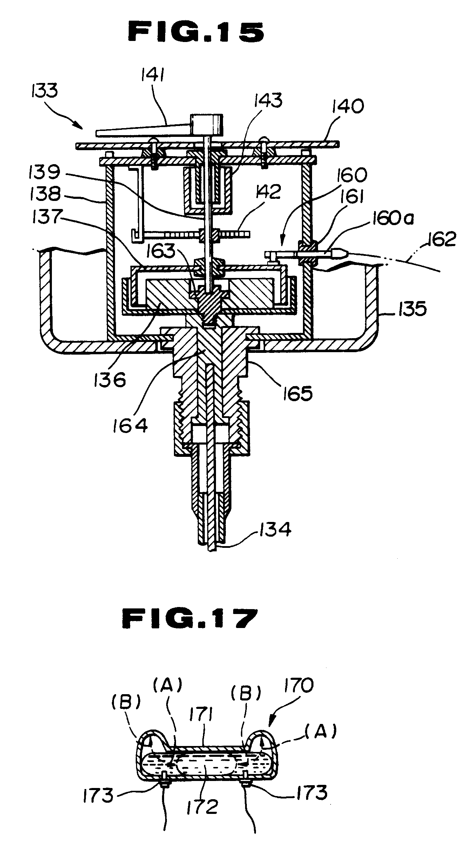

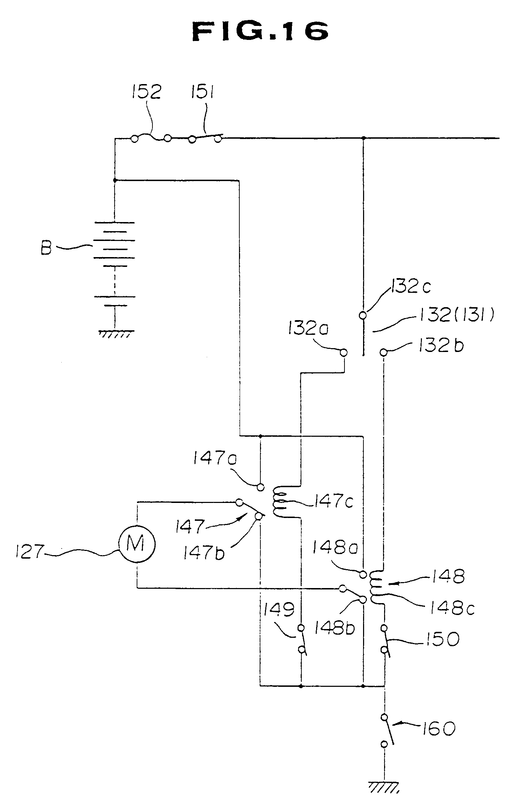

When both contacts 160a and 160b meet at the "0" position indicated by guide needle 141, it stops the rotation of the rotation shaft 139 and turns on the on-off switch 160 simultaneously. The other end of contact 160b may not only be mounted on the rotation shaft 139, but may also be mounted so as to protrude, as shown in Fig. 15. The aluminum disk 137 will then freely rotate together with the rotation shaft 139, or the other contact 160b may be grounded through the speedometer cable 134 as a conductor to the vehicle. In such a case, on-off switch 160 is required, as shown in Fig. 16, to be installed among the negative terminals of the battery B, both relays 147 and 148, and both limit switches 149 and 150.

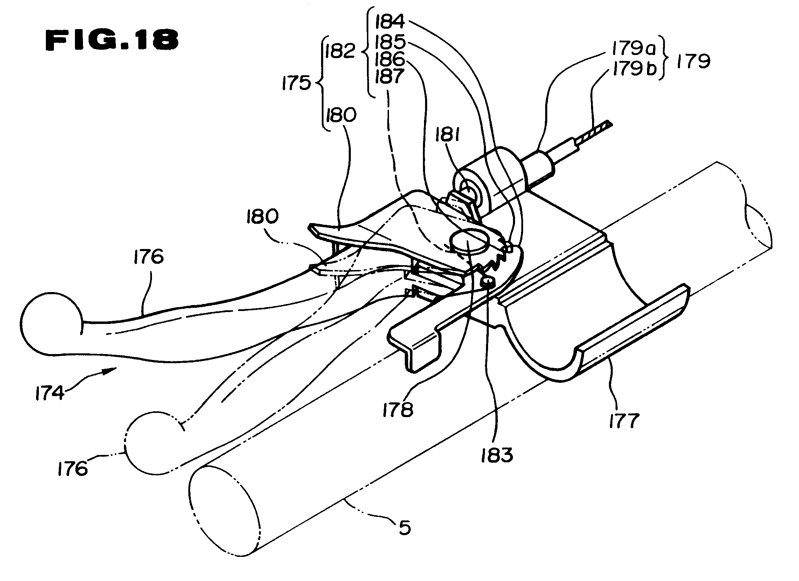

Fig. 17 illustrates a sixth embodiment of the present invention. In this embodiment, acceleration sensor 170 is used as the detector to determine if the vehicle is stationary.

The acceleration sensor 170 is composed of hollow casing 171 mounted at a suitable position of the vehicle; electrically conductive liquid 172 (e.g., mercury) filled in the casing 171; a pair of electrodes 173 mounted protruding out into the casing space 171 a suitable distance from the ends and from the bottom of casing 171. It may be replaced with the proximity switch 146 in the fourth embodiment.

When a two-wheeled vehicle is undergoing changes in acceleration, the fluid in the sensor 170 moves in the direction (a) in Fig. 17 and the connection is broken. When the vehicle is decelerating, the fluid moves in the opposite direction and again the connection is broken. When the vehicle is stopped, the fluid is in contact with both electrodes 173, and the circuit is completed.

During operation of the vehicle, therefore, the operation of the stand motor 127 is blocked regardless of the operation of switch 132 and stand motor 127 can be operated to set the stand body 25 to the retracted position.

A seventh embodiment of the present invention is shown in Fig. 18. This embodiment utilizes brake sensor 175 as the stop-acknowledgment means together with brake function 174 to determine if the vehicle is stopped. Brake lever 176 is mounted with pivot shaft 178 for free rotation on holder 177 fitted on the steering handle 5. The holder 177 is set with one end of the outer cable 179a of the brake cable 179 connected to brake lever 176. Said brake lever 176 is connected with the cable wire 179b.

Said brake sensor 175 is mounted for free rotation on pivot shaft 178 which comprises stop material 180 mounted from the rotation direction on brake lever 176; on-off switch 181 fixed on holder 177 and operated by the rotation of the stop material 180; and lock function 182 which is located between stop material 180 and holder 177, and stops the stop material 180 at an arbitrary rotation position. The lock function 182 comprises the stop lever 184 mounted for free rotation on the second pivot shaft 183 fixed protruding to holder 177 at a certain distance from pivot shaft 178; the lock pin 185 mounted protruding out on the stop lever 184; ratchet blade 186 formed in stop material 180 and equipped with look pin 185; and spring 187 providing constant force in a direction to connect stop lever 184 with the lock pin 185 and the ratchet blade 186. Stop material 180 rotates and meets with the brake lever 176 after the brake lever 176 rotates. Since the stop material 180 is held at the rotation position by the action of lock function 182, the brake lever 176 operated with the stop material 180 is also held at the same operation position. On-off switch 181 is set so that it is switched on to stop the brake lever 176 at the control position at which the brake lever 176 remains when stop material 180 is rotated. Therefore on-off switch 181 is installed at the same position as the proximity switch 146 of the control circuit as shown in the fourth embodiment of the invention.

In the operation of this embodiment, after first moving rotating the brake lever 176 to the control position, the stop material 180 rotates to make contact with brake lever 176, and stop material 180 is stopped by the action of the lock function 182. The brake lever 176 is stopped through the stop material 180 at the same control position. Thus when the brake lever 176 is stopped at the control position, the vehicle is regarded as being stationary. On-off switch 181 will be turned on by rotation of the stop material 180. When this occurs, on-off switch 181 is kept "ON", therefore the drive control of the stand motor 26 is provided by the switch 132.

Conversely, to return brake lever 176, the interlocking of lock pin 185 and ratchet blade 186 will be released by rotating the stop lever 184 against the spring power of the spring 187. The stop power of the stop material 180 and the brake lever 176 will be released, the brake lever 176 and the stop material 180 will be set back to the original positions by the tensile strength of the brake cable 179.

When the brake lever 176 and the stop material 180 are set back, on-off switch 181 will be turned off to make it impossible to extend the stand 25.

It should be noted that the shapes, dimensions, etc., in the components of the above discussion are merely examples, and it is quite possible to select other configurations of comparable efficacy.

### The invention as described above can be summarized as follows:

The invention relates to an stand device for a two-wheeled vehicle, and more specifically to a plurality of means which individually or in conjunction are able to prevent the extension of the stand device when the vehicle is in motion, and also to extend the stand if so desired when the vehicle comes to a stop in the course of moving through traffic or when the vehicle is to be parked. The determinations that the vehicle is stopped and that the stand is to be extended are based on any of several criteria in the present invention: position of the throttle, speed of the engine, needle position on the speedometer, or the state of a motion detector. Electrical circuits for the interpretation of these criteria are also provided.

## Claims

1. A stand device for a two-wheeled vehicle (1) comprising:
a stand (25) pivotally mounted to the vehicle;
a motor (31; 127) to selectively extend or retract said stand (25);
a transmission (32) selectively coupled with said motor (31) and said stand (25);
a control circuit selectable to engage said transmission (32) and to power said motor (31) to extend said stand (25);
a sensor switch (58; 70; 90; 146; 160; 170; 181) actuatable to drive said control circuit; and
a stand switch (55; 132) actuatable by an operator to actuate said control circuit,
**characterized in**
that said sensor switch (58; 70; 90; 146; 160; 170; 181) provides a signal indicating a stationary condition of the vehicle and that said control circuit is rendered operable to extend the stand only when receiving said signal of said sensor switch.

2. A stand device according to claim 1, which further comprises a throttle monitor (58) for detecting whether the throttle is open or closed and in which the determination that said vehicle is stationary is based on information from the throttle monitor.

3. A stand device according to claim 1, which further comprises an engine-speed monitor (70) for detecting revolutions per minute in which the determination that said vehicle is stationary is based on information from the engine-speed monitor.

4. A stand device according to claim 1, which further comprises a speedometer needle switch (146) in which the determination that said vehicle is stationary is based on information on the position of the speedometer needle (141).

5. A stand device according to claim 4, wherein the vehicle is judged to be stationary when the speedometer needle (141) indicates lower than a predetermined value.

6. A stand device according to claim 4, wherein the vehicle is judged to be stationary when the speedometer needle (141) indicates zero.

7. A stand device according to claim 1, which further comprises a motion sensor (170) for detecting changes in acceleration in which the determination that said vehicle is stationary is based on information from the motion sensor.

8. A stand device according to claim 1, wherein the vehicle is judged to be stationary when a brake lever (176) is set to an operated position.

9. A stand device according to claim 1, wherein the motor (31) is attached to a body of the vehicle through an elastic member for preventing a shock produced when the stand touches the ground from being transmitted to the body and for protecting the stand device and the body from being damaged by the shock.

10. A stand device according to claim 1, wherein said transmission (32) comprises a driving gear (35a) driven by said motor (31) and a driven gear (35b) having a fan shape, said driven gear (35b) being driven by said driving gear (35a) when said stand device pivots to a predetermined position.

## Patentansprüche

1. Ständervorrichtung für ein Zweirad-Fahrzeug (1) umfassend:
einen schwenkbar an dem Fahrzeug angebrachten Ständer (25),
einen Motor (31; 127) zum wahlweisen Ausfahren oder Zurückziehen des Ständers (25),
ein wahlweise mit dem Motor (31) und dem Ständer (25) gekoppeltes Getriebe (32),
eine Steuerschaltung, die dazu heranziehbar ist, das Getriebe (32) zu schalten und den Motor (31) anzutreiben, um den Ständer (25) auszufahren,
einen Sensorschalter (58; 70; 90; 146; 160; 170; 181), der dazu betätigbar ist, die Steuerschaltung zu aktivieren, und
einen von einem Bediener betätigbaren Ständerschalter (55; 132) zur Inbetriebsetzung der Steuerschaltung,
**dadurch gekennzeichnet,**
daß der Sensorschalter (58; 70; 90; 146; 160; 170; 181) ein Signal bereitstellt, das einen stationären Zustand des Fahrzeugs anzeigt, und daß die Steuerschaltung nur dann zum Ausfahren des Ständers betriebsbereit gemacht wird, wenn sie das Signal des Sensorschalters empfängt.

2. Ständervorrichtung nach Anspruch 1, ferner umfassend einen Drosselklappen-Monitor (58) zur Feststellung, ob die Drosselklappe geöffnet oder geschlossen ist, wobei die Feststellung, daß das Fahrzeug steht, auf Informationen von dem Drosselklappen-Monitor basiert.

3. Ständervorrichtung nach Anspruch 1, ferner umfassend einen Motorgeschwindigkeits-Monitor (70) zur Drehzahlerfassung, wobei die Feststellung, daß das Fahrzeug steht, auf Informationen von dem Motorgeschwindigkeits-Monitor basiert.

4. Ständervorrichtung nach Anspruch 1, ferner umfassend einen Tachometernadelschalter (146), wobei die Feststellung, daß das Fahrzeug steht, auf Positionsinformationen der Tachometernadel (141) basiert.

5. Ständervorrichtung nach Anspruch 4, wobei das Fahrzeug als stehend betrachtet wird, wenn die Tachometernadel (141) einen Wert anzeigt, der kleiner als ein vorbestimmter Wert ist.

6. Ständervorrichtung nach Anspruch 4, wobei das Fahrzeug als stehend betrachtet wird, wenn die Tachometernadel (141) null anzeigt.

7. Ständervorrichtung nach Anspruch 1, umfassend einen Bewegungssensor (170) zur Erfassung von Änderungen der Beschleunigung, wobei die Feststellung, daß das Fahrzeug steht, auf Informationen von dem Bewegungssensor basiert.

8. Ständervorrichtung nach Anspruch 1, wobei das Fahrzeug als stehend betrachtet wird, wenn ein Bremshebel (176) in eine Betätigungsstellung versetzt ist.

9. Ständervorrichtung nach Anspruch 1, wobei der Motor (31) über ein elastisches Element an dem Fahrzeugkörper angebracht ist, um es zu vermeiden, daß ein Stoß, der erzeugt wird, wenn der Ständer den Boden berührt, zu dem Boden übertragen wird, und um die Ständervorrichtung und den Körper vor Beschädigungen durch den Stoß zu schützen.

10. Ständervorrichtung nach Anspruch 1, wobei das Getriebe (32) ein von dem Motor (31) angetriebenes Antriebszahnrad (35a) und ein fächerförmiges angetriebenes Zahnrad (35b) umfaßt, wobei das angetriebene Zahnrad (35b) von dem Antriebszahnrad (35a) angetrieben wird, wenn die Ständervorrichtung in eine vorbestimmte Position schwenkt.

## Revendications

1. Dispositif de support pour véhicule à deux roues (1) comprenant :
un support (25) pivotant monté sur le véhicule ;
un moteur (31 ; 127) pour détendre ou rétracter au choix ledit support (25) ;
une transmission (32) reliée de manière sélective au dit moteur (31) et au dit support (25) ;
un circuit de commande sélectionnable pour enclencher ladite transmission (32) et pour lancer ledit moteur (31) afin de détendre ledit support (25) ;
un interrupteur de capteur (58 ; 70 ; 90 ; 146 ; 160 ; 170 ; 181) mis en marche pour déclencher ledit circuit de commande ; et
un interrupteur de support (55 ; 132) mis en marche par un opérateur pour mettre en marche ledit circuit de commande,
**caractérisé en**
ce que ledit interrupteur de capteur (58 ; 70 ; 90 ; 146 ; 160 ; 170 ; 181) fournit un signal indiquant un état immobile du véhicule et en ce que ledit circuit de commande se met à fonctionner pour détendre le support uniquement lorsqu'il reçoit ledit signal du dit interrupteur de capteur.

2. Dispositif de support selon la revendication 1, qui comprend en outre un dispositif de contrôle de l'obturateur (58) destiné à détecter si l'obturateur est ouvert ou fermé et où le fait de déterminer que ledit véhicule est immobile repose sur des informations provenant du dispositif de contrôle de l'obturateur.

3. Dispositif de support selon la revendication 1, qui comprend en outre un dispositif de contrôle de la vitesse du moteur (70) pour détecter les tours par minute et où le fait de déterminer que ledit véhicule est immobile repose sur des informations provenant du dispositif de contrôle de la vitesse du moteur.

4. Dispositif de support selon la revendication 1, qui comprend en outre un interrupteur d'aiguille de l'indicateur de vitesse (146) où le fait de déterminer que ledit véhicule est immobile repose sur des informations relatives à la position de l'aiguille de l'indicateur de vitesse (141).

5. Dispositif de support selon la revendication 4, où le véhicule est considéré immobile lorsque l'aiguille de l'indicateur de vitesse (141) indique une valeur inférieure à une valeur prédéterminée.

6. Dispositif de support selon la revendication 4, où le véhicule est considéré immobile lorsque l'aiguille de l'indicateur de vitesse (141) indique zéro.

7. Dispositif de support selon la revendication 1, qui comprend en outre un capteur de mouvement (170) pour détecter les changements d'accélération et où le fait de déterminer que ledit véhicule est immobile repose sur des informations provenant du capteur de mouvement.

8. Dispositif de support selon la revendication 1, où le véhicule est considéré immobile lorsqu'un levier de frein (176) est mis en position de marche.

9. Dispositif de support selon la revendication 1, où le moteur (31) est fixé à la carrosserie du véhicule par l'intermédiaire d'un élément élastique afin d'empêcher que le choc produit lorsque le support touche le sol ne soit transmis à la carrosserie et afin de protéger le dispositif de support et la carrosserie contre une détérioration due au choc.

10. Dispositif de support selon la revendication 1, où ladite transmission (32) comprend une roue dentée menante (35a) commandé par ledit moteur (31) et une roue dentée menée (35b) en forme d'éventail, la roue menée
(35b) étant commandé par la roue menante
(35a) lorsque ledit dispositif de support pivote à une position prédéterminée.
